(19) Europäisches Patentamt / European Patent Office / Office européen des brevets

(11) **EP 1 990 735 A2**

(12) **EUROPEAN PATENT APPLICATION**

(43) Date of publication:
**12.11.2008 Bulletin 2008/46**

(51) Int Cl.:
*G06F 17/15* (2006.01)

(21) Application number: **08103631.1**

(22) Date of filing: **21.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.05.2007 JP 2007127029**

(71) Applicant: **ONO SOKKI CO., LTD.**
**Yokohama-shi,**
**Kanagawa-ken 226-8507 (JP)**

(72) Inventor: **Oie, Samon**
**Midori-ku**
**Yokohama-shi, Kanagawa 226-8507 (JP)**

(74) Representative: **Stebbing, Timothy Charles**
**Haseltine Lake**
**5th Floor Lincoln House**
**300 High Holborn**
**London, WC1V 7JH (GB)**

(54) **Peak position search method, apparatus, and program storage medium**

(57) The present invention relates to a peak position search method and a peak position search apparatus that determine a peak position of a cross correlation between two pieces of sampled data and determines the peak position of the cross correlation between the two pieces of sampled data with high precision. The peak position is determined by equations

$$R_{2N}^{(x,y)}(\tau) = \sum_{l=0}^{2N-1} \psi_{2N}(\tau - l\Delta t) R_{2N}^{(x,y)}(l\Delta t)$$

$$\psi_{2N}(t) = \frac{1}{2N} \cdot \cos\left(\frac{\pi t}{2N \cdot \Delta t}\right) \cdot \frac{\sin\left(\dfrac{\pi t}{\Delta t}\right)}{\sin\left(\dfrac{\pi t}{2N \cdot \Delta t}\right)}$$

representing a cross-correlation function at an arbitrary point T including intermediate points between sampling points at sampling intervals of $\Delta t$.

EP 1 990 735 A2

**(Cont. next page)**

```
              ┌─────────────┐
              │    START    │
              └──────┬──────┘
                     │
        ┌────────────┴────────────┐
        │      ACQUIRE DATA       │  (a)
        └────────────┬────────────┘
                     │
        ┌────────────┴────────────┐
        │    CALCULATE SPECTRA    │  (b)
        └────────────┬────────────┘
                     │
        ┌────────────┴────────────┐
        │    CALCULATE CROSS-     │  (c)
        │   CORRELATION FUNCTION  │
        └────────────┬────────────┘
                     │
        ┌────────────┴────────────┐
        │ SEARCH FOR PEAK POSITION│  (d)
        └────────────┬────────────┘
                     │
              ┌──────┴──────┐
              │     END     │
              └─────────────┘
```

# Fig. 5

**Description**

BACKGROUND OF THE INVENTION

1. Field of the Invention

The present invention relates to a peak position search method and a peak position search apparatus that determine a peak position of a cross correlation between two pieces of sampled data, and a program storage medium storing a peak position search program executed in a computer to cause the computer to operate as the peak position search apparatus.

2. Description of the Related Art

Determining a delay time by the cross-correlation method is a technology widely used in the field of measurement. Thus, estimation of a delay time by the cross-correlation method can be said to be one of fundamental themes, but when sampled data is used, resolution is limited depending on sampling time intervals thereof. To solve such a problem, a method of estimating the peak position by fitting a quadratic function to the vicinity of a peak of a cross-correlation function and a method of estimating the peak position by resetting sampling time intervals and recalculating a cross-correlation function have been adopted (Non-patent Documents 1 and 2). The former method gives an impression of an approximating method that does not lend itself to estimation of an error quantity of a peak position. The latter method will be caught in a dilemma of practical impossibility because precision is strictly determined by sampling time intervals and if a precision problem should be solved, infinitesimal sampling time intervals, that is, an infinite number of pieces of sampled data will be needed. On the other hand, there has been proposed a technique to precisely determine a signal value at any time from a finite number of pieces of sampled data for one cycle by using the sampling theorem of a periodic function (Patent Document 1). However, no technology in which the technology in Patent Document 1 is applied to a cross correlation has been proposed. For example, Non-patent Document 2, which has been published almost five years after the disclosure of Patent Document 1, concentrates only on shortening sampling time intervals for the purpose of improving precision.

[Non-patent Document 1] S. D. Stearns and R. A. David, "Signal Processing Algorithms," (Prentice-Hall, Inc., EnglewoodCliffs, New Jersey, 1988) pp. 212-223.
[Non-patent Document 2] KoichiMakino, Takatoshi Yokota, Kohei Yamamoto, Yoshiaki Okada, and Koichi Yoshihisa, "Measurement of Directivity of Automobile Traveling Noise Using Cross-Correlation Method", Collection of Lectures of the Acoustical Society of Japan, March 2007, pp. 827-828
[Patent Document 1] Japanese Patent Application Laid-Open No. 2002-278948

SUMMARY OF THE INVENTION

In view of the above circumstances, an object of the present invention is to provide a peak position search method and a peak position search apparatus that can determine a peak position of a cross correlation between two pieces of sampled data with high precision, and a peak position search program storage medium storing a peak position search program executed in a computer and capable of causing the computer to operate as the peak position search apparatus capable of determining the peak position with high precision.

A peak position search method according to the present invention to achieve the above obj ect is a peak position search method of determining a peak position of a cross correlation between two pieces of sampled data, including:

a data acquisition step of acquiring two pieces of sampled data

$$\{x_N(n)\},\quad (n=0,1,\cdots,N-1),\quad \{y_N(n)\},\quad (n=0,1,\cdots,N-1)$$

sampled at a predetermined sampling interval $\Delta t$;
a spectrum calculation step of calculating two spectra

$$\{X_{2N}(k)\}, \quad (k = 0,1,\cdots,2N-1), \quad \{Y_{2N}(k)\}, \quad (k = 0,1,\cdots,2N-1)$$

by performing discrete Fourier transform on each of the two pieces of sampled data

$$\{x_{2N}(n)\}, \quad (n = 0,1,\cdots,2N-1), \quad \{y_{2N}(n)\}, \quad (n = 0,1,\cdots,2N-1)$$

having N zero points added to each of the two pieces of sampled data acquired in the data acquisition step;
a cross-correlation function calculation step of determining a cross-correlation function

$$R_{2N}^{(x,y)}(n) = \frac{1}{2N} \sum_{k=0}^{2N-1} X_{2N}^{*}(k) Y_{2N}(k) \exp\left( j\frac{2\pi nk}{2N} \right)$$

$$= \sum_{m=0}^{2N-1} x_{2N}(m-n) y_{2N}(m)$$

by performing inverse discrete Fourier transform of a product of a complex conjugate of one spectrum

$$\{X_{2N}(k)\}, \quad (k = 0,1,\cdots,2N-1)$$

of the two spectra calculated in the spectrum calculation step and the other spectrum

$$\{Y_{2N}(k)\}, \quad (k = 0,1,\cdots,2N-1);$$

and
a peak position search step of determining the peak position according to an equation

$$R_{2N}^{(x,y)}(\tau) = \sum_{l=0}^{2N-1} \psi_{2N}(\tau - l\Delta t) R_{2N}^{(x,y)}(l\Delta t) \qquad \cdots \quad (A)$$

expressing a cross-correlation function $R_{2N}^{(x,y)}(\tau)$ at an arbitrary point $\tau$ including intermediate points between sampling points $l\Delta t$, ($l$=0,1,···,2N-1) at the sampling interval $\Delta t$, where $\psi_{2N}(\tau - l\Delta t)$ is an interpolation function and expressed by

$$\psi_{2N}(t) = \frac{1}{2N} \cdot \cos\left(\frac{\pi t}{2N \cdot \Delta t}\right) \cdot \frac{\sin\left(\dfrac{\pi t}{\Delta t}\right)}{\sin\left(\dfrac{\pi t}{2N \cdot \Delta t}\right)} \qquad \cdots \quad (B)$$

The peak position search method according to the present invention is, in a sense, an application of the technique of Patent Document 1 to a peak position search of cross correlations, but no example of application of the technique of Patent Document 1 to cross correlations or similar technologies thereto is known. The inventors thought up a way of being able to search for a peak position with high precision by applying the technology of Patent Document 1 to cross correlations before completing the present invention.

Here, in the peak position search method according to the present invention, the peak position search step preferably includes:

a first subdivision step of determining a cross-correlation function at each subdivision point obtained by subdividing a first interval near a first peak position including an error determined by the cross-correlation function at the sampling interval $\Delta t$ determined in the cross-correlation function calculation step by an interval $\Delta \tau_1$ which is smaller than the sampling interval $\Delta t$;
a second subdivision step of determining a cross-correlation function at each subdivision point obtained by subdividing a second interval, which is narrower than the first interval, near a second peak position including an error determined by the cross-correlation function at intervals of $\Delta \tau_1$ determined in the first subdivision step by an interval $\Delta \tau_2$ which is smaller than the interval $\Delta \tau_1$; and
an n-th subdivision step of, in an analogous fashion until a peak position with desired precision is searched for, determining a cross-correlation function at each subdivision point obtained by subdividing an n-th interval, which is narrower than the (n-1)-th interval, near a (n-1)-th peak position including an error determined by the cross-correlation function at intervals of $\Delta \tau_{n-1}$ determined in the (n-1)-th subdivision step (n = 2, 3, ... ) by an interval $\Delta \tau_n$ which is smaller than the interval $\Delta \tau_{n-1}$.

By adopting this technique, the amount of operation to determine a peak position with desired precision is reduced, leading to increased speed of operation.

Also in the peak position search method according to the present invention, the sampling interval $\Delta t$ is a sampling time interval $\Delta t$ and the data acquisition step may be a step of acquiring two pieces of sampled time series data

$$\{x_N(n)\}, \quad (n = 0,1, \cdots, N-1), \quad \{y_N(n)\}, \quad (n = 0,1, \cdots, N-1)$$

sampled at the sampling time interval $\Delta t$, where a signal value $x_N(n\Delta t)$ at $t = n\Delta t$ is abbreviated as $x_N(n)$.

However, the peak position search method according to the present invention can also be applied similarly to sampled data whose variable is a spatial position, as well as to sampled data whose variable is time.

A peak position search apparatus according to the present invention to achieve the above object is a peak position search apparatus for determining a peak position of a cross correlation between two pieces of sampled data, including:

a data acquisition section for acquiring two pieces of sampled data

$$\{x_N(n)\}, \quad (n = 0,1, \cdots, N-1), \quad \{y_N(n)\}, \quad (n = 0,1, \cdots, N-1)$$

sampled at a predetermined sampling interval $\Delta t$;
a spectrum calculation section for calculating two spectra

$$\{X_{2N}(k)\}, \quad (k = 0,1,\cdot\cdot\cdot,2N-1), \quad \{Y_{2N}(k)\}, \quad (k = 0,1,\cdot\cdot\cdot,2N-1)$$

by performing discrete Fourier transform on each of the two pieces of sampled data

$$\{x_{2N}(n)\}, \quad (n = 0,1,\cdot\cdot\cdot,2N-1), \quad \{y_{2N}(n)\}, \quad (n = 0,1,\cdot\cdot\cdot,2N-1)$$

having $N$ zero points added to each of the two pieces of sampled data acquired in the data acquisition section; a cross-correlation function calculation section for determining a cross-correlation function

$$R_{2N}^{(x,y)}(n) = \frac{1}{2N}\sum_{k=0}^{2N-1} X_{2N}^{*}(k)Y_{2N}(k)\exp\left(j\frac{2\pi nk}{2N}\right)$$
$$= \sum_{m=0}^{2N-1} x_{2N}(m-n)y_{2N}(m)$$

by performing inverse discrete Fourier transform of a product of a complex conjugate of one spectrum

$$\{X_{2N}(k)\}, \quad (k = 0,1,\cdot\cdot\cdot,2N-1)$$

of the two spectra calculated in the spectrum calculation section and the other spectrum

$$\{Y_{2N}(k)\}, \quad (k = 0,1,\cdot\cdot\cdot,2N-1);$$

and
a peak position search section for determining the peak position according to an equation

$$R_{2N}^{(x,y)}(\tau) = \sum_{l=0}^{2N-1} \psi_{2N}(\tau - l\Delta t)R_{2N}^{(x,y)}(l\Delta t) \qquad \cdots \ (A)$$

expressing a cross-correlation function $R_{2N}^{(x,y)}(\tau)$ at an arbitrary point $\tau$ including intermediate points between sampling points $l\Delta t$, $(l = 0,1, \cdots, 2N\text{-}1)$ at the sampling interval $\Delta t$, where $\psi_{2N}(\tau\text{-}l\Delta t)$ is an interpolation function and expressed by

$$\psi_{2N}(t) = \frac{1}{2N} \cdot \cos\left(\frac{\pi t}{2N \cdot \Delta t}\right) \cdot \frac{\sin\left(\frac{\pi t}{\Delta t}\right)}{\sin\left(\frac{\pi t}{2N \cdot \Delta t}\right)} \qquad \cdots \quad (B)$$

Here, also in the peak position search apparatus according to the present invention, the peak position search section may determine the peak position with the predetermined precision through:

a first subdivision step of determining a cross-correlation function at each subdivision point obtained by subdividing a first interval near a first peak position including an error determined by the cross-correlation function at the sampling interval $\Delta t$ determined by the cross-correlation function calculation section by an interval $\Delta\tau_1$ which is smaller than the sampling interval $\Delta t$;
a second subdivision step of determining a cross-correlation function at each subdivision point obtained by subdividing a second interval, which is narrower than the first interval, near a second peak position including an error determined by the cross-correlation function at intervals of $\Delta\tau_1$ determined in the first subdivision step by an interval $\Delta\tau_2$ which is smaller than the interval $\Delta\tau_1$; and
an n-th subdivision step of, in an analogous fashion until a peak position with desired precision is searched for, determining a cross-correlation function at each subdivision point obtained by subdividing an n-th interval, which is narrower than the (n-1)-th interval, near a (n-1)-th peak position including an error determined by the cross-correlation function at intervals of $\Delta\tau_{n-1}$ determined in the (n-1) -th subdivision step (n = 2, 3,...) by an interval $\Delta\tau_n$ which is smaller than the interval $\Delta\tau_{n-1}$.

Also in the peak position search apparatus according to the present invention, the sampling interval $\Delta t$ is a sampling time interval $\Delta t$ and the data acquisition section may acquire two pieces of sampled time series data

$$\{x_N(n)\}, \quad (n = 0,1, \cdots, N-1), \quad \{y_N(n)\}, \quad (n = 0,1, \cdots, N-1)$$

sampled at the sampling time interval $\Delta t$, where a signal value $x_N(n\Delta t)$ at $t = n\Delta t$ is abbreviated as $x_N(n)$.

Further, the peak position search apparatus according to the present invention preferably includes an analog/digital converter for generating digital sampled time series data by receiving an analog signal and sampling the analog data at a sampling time interval $\Delta t$ in a forward portion of the data acquisition section.

The peak position search apparatus according to the present invention may receive converted sampled time series data after an analog signal is converted into the sampled time series data outside the peak position search apparatus, but the peak position search apparatus according to the present invention may include an analog/digital converter, which receives an analog signal from outside and converts the analog data into sampled time series data inside thereof.

Further, the peak position search apparatus according to the present invention preferably includes an anti-aliasing filter for preventing aliasing noise in a further forward portion of the analog/digital converter.

Accordingly, prevention of mixing of anti-aliasing noise can be controlled by the peak position search apparatus itself.

A peak position search program storage medium according to the present invention to achieve the above object is a peak position search program storage medium storing a peak position search program executed in a computer to cause the computer to operate as a peak position search apparatus for determining a peak position of a cross correlation between two pieces of sampled data, the peak position search apparatus including:

a data acquisition section for acquiring two pieces of sampled data

$$\{x_N(n)\}, \quad (n = 0,1, \cdots, N-1), \quad \{y_N(n)\}, \quad (n = 0,1, \cdots, N-1)$$

sampled at a predetermined sampling interval $\Delta t$;
a spectrum calculation section for calculating two spectra

$$\{X_{2N}(k)\}, \quad (k = 0,1,\cdots,2N-1), \quad \{Y_{2N}(k)\}, \quad (k = 0,1,\cdots,2N-1)$$

by performing discrete Fourier transform on each of the two pieces of sampled data

$$\{x_{2N}(n)\}, \quad (n = 0,1,\cdots,2N-1), \quad \{y_{2N}(n)\}, \quad (n = 0,1,\cdots,2N-1)$$

having $N$ zero points added to each of the two pieces of sampled data acquired by the data acquisition section;
a cross-correlation function calculation section for determining a cross-correlation function

$$R_{2N}^{(x,y)}(n) = \frac{1}{2N} \sum_{k=0}^{2N-1} X_{2N}^{*}(k) Y_{2N}(k) \exp\left( j \frac{2\pi nk}{2N} \right)$$

$$= \sum_{m=0}^{2N-1} x_{2N}(m-n) y_{2N}(m)$$

by performing inverse discrete Fourier transform of a product of a complex conjugate of one spectrum

$$\{X_{2N}(k)\}, \quad (k = 0,1,\cdots,2N-1)$$

of the two spectra calculated by the spectrum calculation section and the other spectrum

$$\{Y_{2N}(k)\}, \quad (k = 0,1,\cdots,2N-1);$$

and
a peak position search section for determining the peak position with desired precision according to an equation

$$R_{2N}^{(x,y)}(\tau) = \sum_{l=0}^{2N-1} \psi_{2N}(\tau - l\Delta t) R_{2N}^{(x,y)}(l\Delta t) \qquad \cdots \quad (A)$$

expressing a cross-correlation function $R_{2N}^{(x,y)}(\tau)$ at an arbitrary point $\tau$ including intermediate points between sampling points ($l\Delta t$), ($l=0,1,\cdots,2N$-1) at the sampling interval $\Delta t$, where $\psi_{2N}(\tau$-$l\Delta t)$ is an interpolation function and expressed by

$$\psi_{2N}(t) = \frac{1}{2N} \cdot \cos\left(\frac{\pi t}{2N \cdot \Delta t}\right) \cdot \frac{\sin\left(\dfrac{\pi t}{\Delta t}\right)}{\sin\left(\dfrac{\pi t}{2N \cdot \Delta t}\right)} \qquad \cdots \ (\text{B})$$

Here, also in the peak position search program storage medium according to the present invention, the peak position search section determines the peak position with the predetermined precision through:

a first subdivision step of determining a cross-correlation function at each subdivision point obtained by subdividing a first interval near a first peak position including an error determined by the cross-correlation function at the sampling interval $\Delta t$ determined by the cross-correlation function calculation section by an interval $\Delta\tau_1$ which is smaller than the sampling interval $\Delta t$;

a second subdivision step of determining a cross-correlation function at each subdivision point obtained by subdividing a second interval, which is narrower than the first interval, near a second peak position including an error determined by the cross-correlation function at intervals of $\Delta\tau_1$ determined in the first subdivision step by an interval $\Delta\tau_2$ which is smaller than the interval $\Delta\tau_1$; and

an n-th subdivision step of, in an analogous fashion until a peak position with desired precision is searched for, determining a cross-correlation function at each subdivision point obtained by subdividing an n-th interval, which is narrower than the (n-1)-th interval, near a (n-1)-th peak position including an error determined by the cross-correlation function at intervals of $\Delta\tau_{n-1}$ determined in the (n-1)-th subdivision step (n = 2, 3,...) by an interval $\Delta\tau_n$ which is smaller than the interval $\Delta\tau_{n-1}$.

Further, in the peak position search program storage medium according to the present invention, the sampling interval $\Delta t$ is a sampling time interval $\Delta t$ and the data acquisition section may acquire two pieces of sampled time series data

$$\{x_N(n)\}, \quad (n = 0, 1, \cdots, N-1)、 \quad \{y_N(n)\}, \quad (n = 0, 1, \cdots, N-1)$$

sampled at the sampling time interval $\Delta t$, where a signal value $x_N(n\Delta t)$ at $t = n\Delta t$ is abbreviated as $x_N(n)$.

According to the present invention, as described above, a peak position of a cross correlation can be searched for with high precision.

BRIEF DESCRIPTION OF THE DRAWINGS

FIG. 1 is an external perspective view of a peak position search computer operating as an embodiment of a peak position search apparatus of the present invention;

FIG. 2 is a hardware configuration diagram of the peak position search computer shown in FIG. 1;

FIG. 3 is a schematic diagram of an analog light reception signal on the input side and sampled time series data on the output side of an A/D converter;

FIG. 4 is a diagram showing the configuration of a peak position search program storage medium as an embodiment of the present invention;

FIG. 5 is a flow chart showing the configuration of a peak position search method as an embodiment of the present invention;

FIG. 6 is a diagram showing a detailed flow of a peak position search step;

FIG. 7 is a functional block diagram of an embodiment of the peak position search apparatus of the present invention; and

FIG. 8 is an explanatory diagram of repetitive operations in a peak position search section.

DESCRIPTION OF THE PREFERRED EMBODIMENT

An embodiment of the present invention will be described below, taking application of the present invention to measurement of the moving speed as an example.

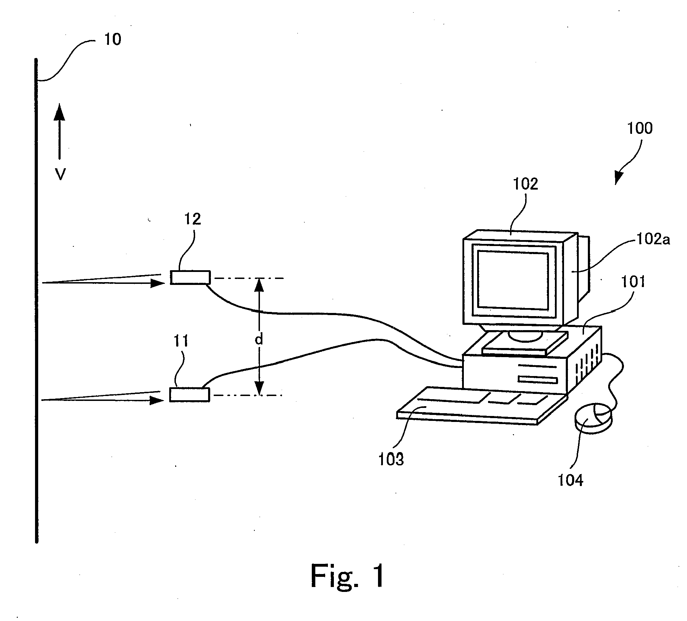

FIG. 1 is a perspective view of appearance of a peak position search computer operating as an embodiment of a peak position search apparatus of the present invention. The peak position search apparatus as an embodiment of the present invention is realized by combining hardware of a peak position search computer 100 and software executed ins ide the hardware.

The peak position search computer 100 includes a main body 101 containing a CPU, a RAM memory, a magnetic disk, a communication board and the like, a display 102 for displaying a screen on a display screen 102a based on instructions from the main body, a keyboard 103 for inputting instructions of an operator and character information into the peak position search computer, and a mouse 104 for inputting instructions in accordance with an icon or the like displayed at a position after any position on the display screen is specified.

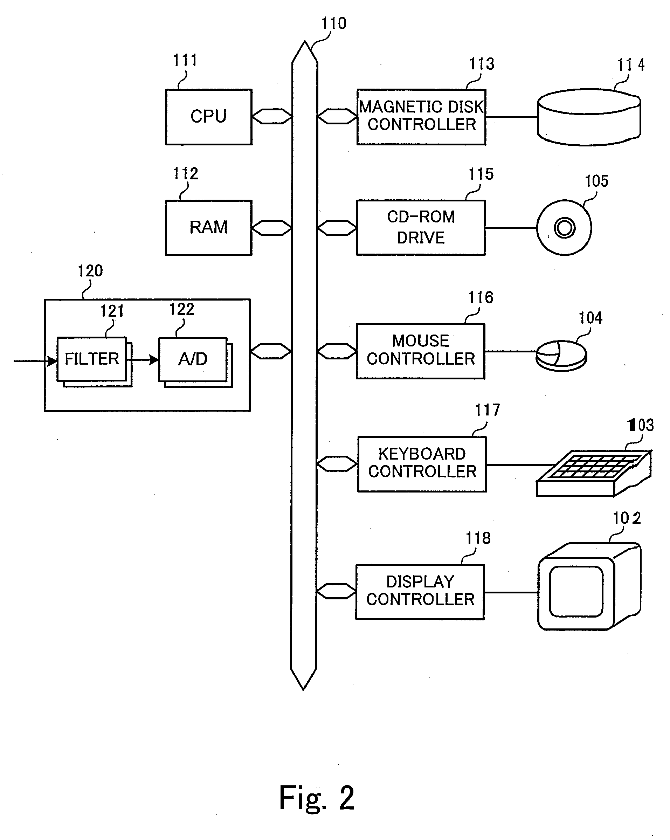

The main body 101 also contains a CD-ROM drive into which a CD-ROM 105 (See FIG. 2) is removably inserted and that drives the inserted CD-ROM 105.

Here, the CD-ROM 105 has a peak position search program as an embodiment of the present invention stored therein. After the CD-ROM 105 is inserted into the main body 101, the peak position search program stored in the CD-ROM 105 is installed by the CD-ROM drive into the magnetic disk of the peak position search computer 100. When the peak position search program installed inside the magnetic disk of the peak position search computer 100 is activated, the peak position search computer 100 operates as an embodiment of the peak position search apparatus of the present invention.

In the present embodiment, two photoelectric sensors 11, 12 are connected to the peak position search computer 100. These two photoelectric sensors 11, 12 each shine light on a measurement target 10 moving in an arrow direction in FIG. 1 and then receive a reflected light thereof before a light reception signal being input into the peak position search computer 100 and are positioned with a distance "d" interposed therebetween. In the peak position search computer 100, a peak position of cross correlations of two light reception signals obtained by the two photoelectric sensors 11, 12 is determined and the moving speed of the measurement target 10 $V=(m/\text{sec})$ is measured as $V= d/_{\tau}$ from the peak position thereof $\tau(\text{sec})$ and the distance $d(m)$.

The two photoelectric sensors 11, 12 are positioned extremely exactly the distance d away and a technology to determine the peak position T with high precision by operations in the peak position search computer 100 will be described below.

FIG. 2 is a hardware configuration diagram of the peak position search computer 100 shown in FIG. 1.

In the hardware configuration diagram, there are shown a central processing unit (CPU) 111, a RAM 112, a magnetic disk controller 113, a CD-ROM drive 115, a mouse controller 116, a keyboard controller 117, a display controller 118, and an A/D conversion board 120, and these components are connected by a bus 110.

A filter 121 and an A/D converter 122 for two channels are mounted on the A/D conversion board 120, and the A/D conversion board 120 is mounted inside the main body 101 of the peak position search computer 100 shown in FIG. 1.

The A/D converter 122 on the A/D conversion board 120 samples an input analog light reception signal at a predetermined sampling time interval (sampling interval) $\Delta t$ to generate digital sampled time series data. The filter 121 mounted on the A/D conversion board 120 is a low-pass anti-aliasing filter to prevent mixing of aliasing noise into the digital sampled time series data obtained by the A/D converter 122.

As described with reference to FIG. 1, the CD-ROM drive 115 is used, after the CD-ROM 105 is inserted into the CD-ROM drive 115, to access the CD-ROM 105.

In FIG. 2, there are also shown a magnetic disk 114 accessed by the magnetic disk controller 113, a mouse 104 controlled by the mouse controller 116, a keyboard 103 controlled by the keyboard controller 117, and a display 102 controlled by the display controller 118.

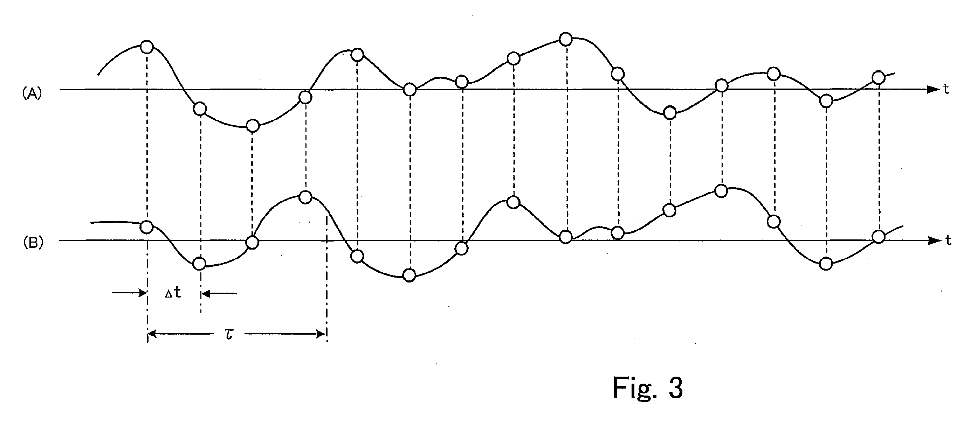

FIG. 3 is a schematic diagram of an analog light reception signal on the input side and sampled time series data on the output side of the A/D converter 122.

(A) and (B) in FIG. 3 are analog signal waveforms after passing through an anti-aliasing filter obtained from the photoelectric sensors 11, 12 respectively, and their phases are shifted by an angle determined by the distance d (known) shown in FIG. 1 and a moving speed V (here unknown) of the measurement target 10.

In theA/D converter 122, these two analog light reception signals are sampled at the sampling time interval (sampling interval) $\Delta t$ to generate two pieces of sampled time series data in which numerical values representing magnitudes of signals at each time corresponding to a circle are arranged.

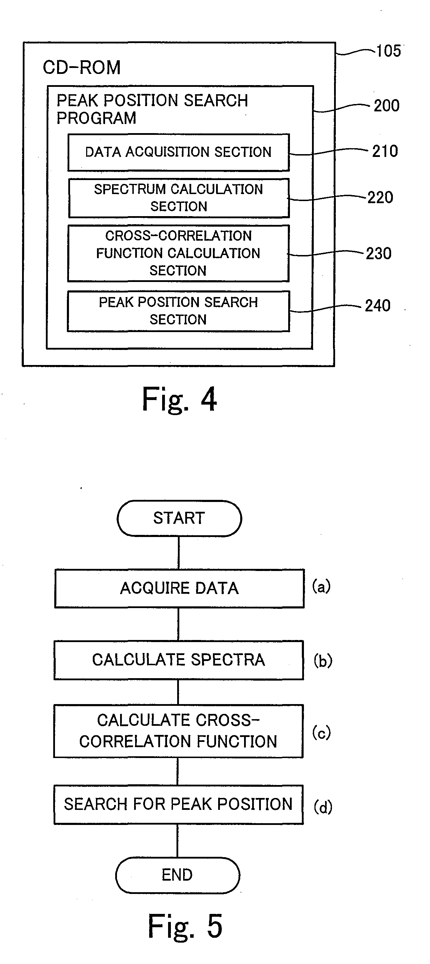

FIG. 4 is a diagram showing the configuration of a peak position search program storage medium as an embodiment of the present invention.

Here, a peak position search program 200 is stored in the CD-ROM 105. The peak position search program 200 includes a data acquisition section 210, a spectrum calculation section 220, a cross-correlation function calculation section 230, and a peak position search section 240.

An operation of each section constituting the peak position search program 200 will be described later.

FIG. 5 is a flow chart showing the configuration of a peak position search method as an embodiment of the present invention.

The peak position search method includes a data acquisition step (step a), a spectrum calculation step (step b), a cross-correlation function calculation step (step c), and a peak position search step (step d).

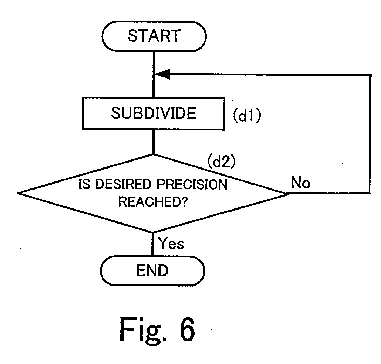

FIG. 6 is a diagram showing a detailed flow of the peak position search step (step d). In the peak position search step (step d), subdivision (step d1) is repeated until desired precision is achieved (step d2).

The peak position search method shown in FIGS. 5 and 6 is implemented in the present embodiment by the peak position search program shown in FIG. 4 after the peak position search program being installed in the peak position search computer 100 shown in FIGS. 1 and 2 and executed.

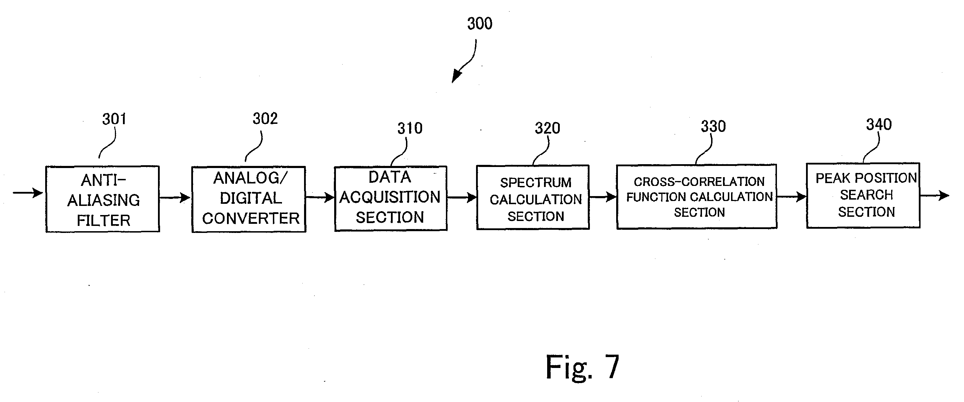

The operation of each step of the peak position search method will be described when a peak position search apparatus in FIG. 7 described later is described together with that of each step of the peak position search program.

FIG. 7 is a functional block diagram of an embodiment of a peak position search apparatus of the present invention realized by the peak position search program shown in FIG. 4 being installed in the peak position search computer 100 shown in FIGS. 1 and 2 and executed.

A peak position search apparatus 300 shown in FIG. 5 includes an anti-aliasing filter 301, an analog/digital converter 302, a data acquisition section 310, a spectrum calculation section 320, a cross-correlation function calculation section 330, and a peak position search section 340.

The anti-aliasing filter 301 and the analog/digital converter 302 correspond to the filter 121 and the A/D converter 122 on the A/D conversion board 120 shown in FIG. 2. Other than these, namely, the data acquisition section 310, the spectrum calculation section 320, the cross-correlation function calculation section 330, and the peak position search section 340 are functions realized inside the peak position search computer 100 by the peak position search program executed by the CPU 111 (See FIGS. 1 and 2) of the peak position search computer 100. Regarding the peak position search program 200 shown in FIG. 4 and the peak position search method shown in FIG. 5, the data acquisition section 310 of the peak position search apparatus 300 in FIG. 7 corresponds to the data acquisition section 210 of the peak position search program 200 in FIG. 4 and the data acquisition step (step a) of the peak position search method in FIG. 5, the spectrum calculation section 320 of the peak position search apparatus 300 in FIG. 7 corresponds to the spectrum calculation section 220 of the peak position search program 200 in FIG. 4 and the spectrum calculation step (step b) of the peak position search method in FIG. 5, the cross-correlation function calculation section 330 of the peak position search apparatus 300 in FIG. 7 corresponds to the cross-correlation function calculation section 230 of the peak position search program 200 in FIG. 4 and the cross-correlation function calculation step (step c) of the peak position search method in FIG. 5, and the peak position search section 340 of the peak position search apparatus 300 in FIG. 7 corresponds to the peak position search section 240 of the peak position search program 200 in FIG. 4 and the peak position search step (step d) of the peak position search method in FIG. 5. However, while the data acquisition section 310, the spectrum calculation section 320, and the peak position search section 340 of the peak position search apparatus 300 in FIG. 7 each are a combination of hardware and software, components of the peak position search program 200 in FIG. 4 corresponding to these sections are application software only. The peak position search method in FIG. 5 is implemented in the present embodiment in the peak position search computer 100 in FIGS. 1 and 2 after the peak position search program in FIG. 4 being installed in the peak position search computer 100 and executed in the peak position search computer 100.

By describing the operation of each section of the peak position search apparatus 300 in FIG. 7 below, the peakposition search program 200 in FIG. 4 and the peak position search method in FIG. 5 will also be described.

The data acquisition section 310 of the peak position search apparatus 300 in FIG. 7 controls the A/D conversion board 120 shown in FIG. 2 to capture digital sampled time series data obtained by filtering and A/D conversion by the A/D conversion board 120 into the peak position search program 200 in FIG. 4. In terms of hardware, the data acquisition section 310 corresponds to the CPU 111 executing the data acquisition section 210 constituting the peak position search program 200 in FIG. 4.

It is assumed that two pieces of sampled time series data, each consisting of N points,

$$\{x_N(n)\}, \quad (n = 0, 1, \cdots, N-1)$$

$$\{y_N(n)\}, \quad (n = 0, 1, \cdots, N-1)$$

corresponding to two light reception signals generated by the two photoelectric sensors 11, 12 shown in FIG. 1 are acquired in a manner described above by the data acquisition section 310, where a signal value $x_N(n\Delta t)$ at $t=n\Delta t$ is abbreviated as $x_N(n)$.

A spectrum of each of the above two pieces of sampled time series data is determined by the spectrum calculation section 320 in FIG. 7.

Here, first

$$\{x_{2N}(n)\}, \quad (n = 0,1,\cdots,2N-1), \quad \{y_{2N}(n)\}, \quad (n = 0,1,\cdots,2N-1)$$

obtained by adding N zero points to each piece of sampled time series data is generated to prevent mixing of circulatory noise after cross-correlation function calculation and FFT operation processing is formed on each before two spectra

$$\{X_{2N}(k)\}, \quad (k = 0,1,\cdots,2N-1), \quad \{Y_{2N}(k)\}, \quad (k = 0,1,\cdots,2N-1)$$

are determined.

The cross-correlation function calculation section 330 in FIG. 7 performs inverse Fourier transform of a product of a complex conjugate of one spectrum of these two spectra $\{X_{2N}(k)\}$, $(k=0,1,\cdots,2N-1)$ and the other spectrum $\{Y_{2N}(k)\}$, $(k=0,1,\cdots,2N-1)$

to calculate a cross-correlation function $R_{2N}^{(x,y)}(n)$ as

$$R_{2N}^{(x,y)}(n) = \frac{1}{2N}\sum_{k=0}^{2N-1} X_{2N}^{*}(k)Y_{2N}(k)\exp\left(j\frac{2\pi nk}{2N}\right)$$

$$= \frac{1}{2N}\sum_{k=0}^{2N-1}\sum_{l=0}^{2N-1} x_{2N}(l)\exp\left(j\frac{2\pi lk}{2N}\right)\sum_{m=0}^{2N-1} y_{2N}(m)\exp\left(-j\frac{2\pi mk}{2N}\right)\exp\left(j\frac{2\pi nk}{2N}\right)$$

$$= \sum_{l=0}^{2N-1}\sum_{m=0}^{2N-1} x_{2N}(l)y_{2N}(m)\delta_{m,l+n}$$

$$= \sum_{l=0}^{2N-1} x_{2N}(l)y_{2N}(l+n)$$

$$= \sum_{m=0}^{2N-1} x_{2N}(m-n)y_{2N}(m)$$

$$\cdots \text{(C)}$$

Therefore, if a time series $\{y_{2N}(n)\}$ is a time series $y_{2N}(n)=\alpha \cdot x_{2N}(n-n_0)$ obtained by shifting the time of the time series $\{x_{2N}(n)\}$ by an integral multiple $n_0\Delta t$ of the sampling time interval $\Delta t$, the cross-correlation function will be

$$R_{2N}^{(x,y)}(n) = \sum_{l=0}^{2N-1} x_{2N}(l) y_{2N}(l+n) = \alpha \sum_{l=0}^{2N-1} x_{2N}(l) x_{2N}(l+n-n_0)$$

$$= \sum_{m=0}^{2N-1} x_{2N}(m-n) y_{2N}(m) = \alpha \sum_{m=0}^{2N-1} x_{2N}(m-n) x_{2N}(m-n_0)$$

$$\cdots \quad (D)$$

which takes the maximum value at $n=n_0$. However, if the time series $\{y_{2N}(n)\}$ is a time series $y_{2N}(n)=\alpha \cdot x_{2N}(n-n_0-\delta)$ obtained by shifting the time of the time series $\{x_{2N}(n)\}$ by any real multiple $(n_0 + \delta)\Delta t$, $(0 < \delta < 1)$ of the sampling time interval $\Delta t$, the peak position of the cross-correlation function does not exist at a position where $n$ takes an integral value and an estimate of delay time contains an error of maximally about half the sampling time interval $\Delta t/2$.

Thus, the peak position search section 340 of the peak position search apparatus 300 in FIG. 7 searches for an exact peak position in the following manner.

Since the band of the original time series $\{x_{2N}(n)\}$, $\{y_{2N}(n)\}$ is limited, as is evident from the formula (D) for the correlation function, the band of the above cross-correlation function is also limited. Therefore, the value of the cross-correlation function with any time lag $\tau$ is given by

$$R_{2N}^{(x,y)}(\tau) = \sum_{l=0}^{2N-1} \psi_{2N}(\tau - l\Delta t) R_{2N}^{(x,y)}(l\Delta t)$$

$$\cdots \quad (A)$$

$$\psi_{2N}(t) = \frac{1}{2N} \cdot \cos\left(\frac{\pi t}{2N \cdot \Delta t}\right) \cdot \frac{\sin\left(\dfrac{\pi t}{\Delta t}\right)}{\sin\left(\dfrac{\pi t}{2N \cdot \Delta t}\right)} \qquad \cdots \quad (B)$$

To determine the peak position of a cross-correlation function according to this formula, first three positions near a peak of the cross-correlation function obtained from first discrete data are determined and then the interval is subdivided to determine the value of the cross-correlation function at a subdivided point using Formula (A). Further, three positions near a peak of the obtained cross-correlation function are determined and the interval is subdivided to determine the cross-correlation function at a re-subdivided point using Formula (A). This process is repeated until desired time precision is achieved to determine the peak position with a desired level of precision.

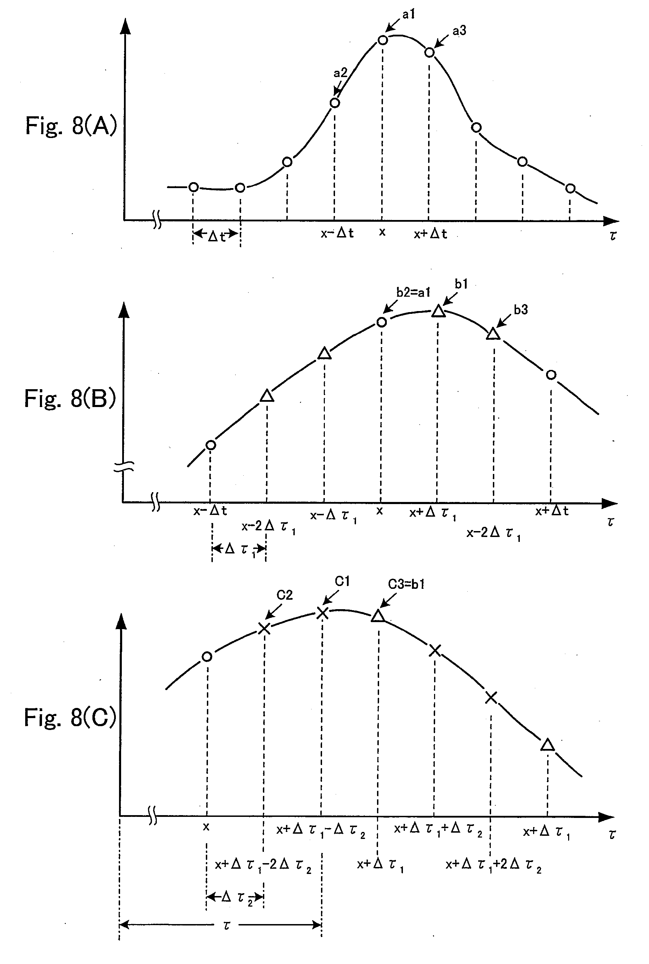

FIG. 8 is an explanatory diagram of repetitive operations in the peak position search section 340.

FIG. 8A is a diagram schematically showing the vicinity of a peak position of the cross-correlation function determined by the cross-correlation function calculation section 330.

A cross-correlation function at each discrete point with a circle at intervals of $\Delta t$ is determined. Lines connecting these points are attached for convenience sake.

Here, a first interval of both sides a2 and a3 sandwiching a first peak position a1 including an error is recognized from the cross-correlation functions in FIG. 8A and this time, as shown in FIG. 8B, a cross-correlation function is determined at each point obtained by subdividing the first interval by an interval $\Delta\tau_1$ which is smaller than $\Delta t$ according to Formula (A). Incidentally, the vertical axis and the horizontal axis in FIG. 8B are scaled up compared with FIG. 8A.

In contrast to a simple interpolating calculation, the cross-correlation function at this time can theoretically be calculated extremely exactly.

Also in FIG. 8B, a second interval of both sides b2 (= a1) and b3 with a second peak position b1 in between including an error is recognized and this time, as shown in FIG. 8C, a cross-correlation function is determined at each point obtained by subdividing the second interval by an interval $\Delta\tau_2$ which is still smaller than the interval $\Delta\tau_1$ according to Formula (A).

Incidentally, the vertical axis and the horizontal axis in FIG. 8C are further scaled up compared with FIG. 8B.

Further, a third interval of both sides c1 and c3 (= b1) with a third peak position c1 in FIG. 8C in between is recognized and the third interval is further subdivided to determine a cross-correlation function at each subdivided point according to Formula (A).

This operation of subdivision is repeated until necessary time precision is obtained to determine the peak position with extremely high precision.

Here, if it is assumed that necessary time precision is obtained in the stage of FIG. 8C, the peak position at this stage $\tau$ is used to determine the moving speed $V$ of the measurement target 10 shown in FIG. 1 by $V = {}^d/_\tau$.

Incidentally, here an example in which the present invention is applied to measurement of the moving speed $V$ of the measurement target 10 shown in FIG. 1 is shown. Measuring some physical quantity by determining a peak position of cross correlations is adopted in an extremely wide range of fields, and the present invention can be widely applied to fields in which some physical quantity is measured by determining a peak position of cross correlations regardless of the field of measurement.

**Claims**

1. A peak position search method of determining a pea k position of a cross correlation between two pieces of sample d data, **characterized by** including:

   a data acquisition step of acquiring two pieces of sample d data

$$\{x_N(n)\}, \quad (n = 0,1,\cdots,N-1), \quad \{y_N(n)\}, \quad (n = 0,1,\cdots,N-1)$$

   sampled at a predetermined sampling interval $\Delta t$;
   a spectrum calculation step of calculating two spectra

$$\{X_{2N}(k)\}, \quad (k = 0,1,\cdots,2N-1), \quad \{Y_{2N}(k)\}, \quad (k = 0,1,\cdots,2N-1)$$

   by performing discrete Fourier transform on each of the two pieces of sampled data

$$\{x_{2N}(n)\}, \quad (n = 0,1,\cdots,2N-1), \quad \{y_{2N}(n)\}, \quad (n = 0,1,\cdots,2N-1)$$

   having N zero points added to each of the two pieces of sampled data acquired in the data acquisition step;
   a cross-correlation function calculation step of determining a cross-correlation function

$$R_{2N}^{(x,y)}(n) = \frac{1}{2N} \sum_{k=0}^{2N-1} X_{2N}^*(k) Y_{2N}(k) \exp\left( j \frac{2\pi nk}{2N} \right)$$

$$= \sum_{m=0}^{2N-1} x_{2N}(m-n) y_{2N}(m)$$

by performing inverse discrete Fourier transform of a product of a complex conjugate of one spectrum

$$\left\{X_{2N}(k)\right\}, \quad \left(k = 0,1, \cdot \ \cdot \ \cdot, 2N - 1\right)$$

of the two spectra calculated in the spectrum calculation step and the other spectrum

$$\left\{Y_{2N}(k)\right\}, \quad \left(k = 0,1, \cdot \ \cdot \ \cdot, 2N - 1\right);$$

and
a peak position search step of determining the peak position according to an equation

$$R_{2N}^{(x,y)}(\tau) = \sum_{l=0}^{2N-1} \psi_{2N}(\tau - l\Delta t) R_{2N}^{(x,y)}(l\Delta t) \qquad \text{... (A)}$$

expressing a cross-correlation function $R_{2N}^{(x,y)}(\tau)$ at an arbitrary point $\tau$ including intermediate points between sampling points $l\Delta t$, $(l=0,1,\cdots,2N\text{-}1)$ at the sampling interval $\Delta t$, where $\psi_{2N}(\tau\text{-}l\Delta t)$ is an interpolation function and expressed by

$$\psi_{2N}(t) = \frac{1}{2N} \cdot \cos\left(\frac{\pi t}{2N \cdot \Delta t}\right) \cdot \frac{\sin\left(\dfrac{\pi t}{\Delta t}\right)}{\sin\left(\dfrac{\pi t}{2N \cdot \Delta t}\right)} \qquad \text{... (B)}$$

2. The peak position search method according to claim 1, **characterized in that** the peak position search step includes:

a first subdivision step of determining a cross-correlation function at each subdivision point obtained by subdividing a first interval near a first peak position including an error determined by the cross-correlation function at the sampling interval $\Delta t$ determined in the cross-correlation function calculation step by an interval $\Delta\tau_1$ which is smaller than the sampling interval $\Delta t$;
a second subdivision step of determining a cross-correlation function at each subdivision point obtained by subdividing a second interval, which is narrower than the first interval, near a second peak position including an error determined by the cross-correlation function at intervals of $\Delta\tau_1$ determined in the first subdivision step by an interval $\Delta\tau_2$ which is smaller than the interval $\Delta\tau_1$; and
an n-th subdivision step of, in an analogous fashion until a peak position with desired precision is searched for, determining a cross-correlation function at each subdivision point obtained by subdividing an n-th interval, which is narrower than the (n-1)-th interval, near a (n-1)-th peak position including an error determined by the cross-correlation function at intervals of $\Delta\tau_{n-1}$ determined in the (n-1)-th subdivision step (n = 2, 3, ...) by an interval $\Delta\tau_n$ which is smaller than the interval $\Delta\tau_{n-1}$.

3. The peak position search method according to claim 1 or 2, **characterized in that** the sampling interval $\Delta t$ is a sampling time interval $\Delta t$ and the data acquisition step is a step of acquiring two pieces of sampled time series data

$$\{x_N(n)\}, \quad (n = 0,1,\cdots,N-1), \quad \{y_N(n)\}, \quad (n = 0,1,\cdots,N-1)$$

sampled at the sampling time interval $\Delta t$, where a signal value $x_N(n\Delta t)$ at $t = n\Delta t$ is abbreviated as $x_N(n)$.

4.  A peak position search apparatus for determining a peak position of a cross correlation between two pieces of sampled data, **characterized by** including:

a data acquisition section for acquiring two pieces of sampled data

$$\{x_N(n)\}, \quad (n = 0,1,\cdots,N-1), \quad \{y_N(n)\}, \quad (n = 0,1,\cdots,N-1)$$

sampled at a predetermined sampling interval $\Delta t$;
a spectrum calculation section for calculating two spectra

$$\{X_{2N}(k)\}, \quad (k = 0,1,\cdots,2N-1), \quad \{Y_{2N}(k)\}, \quad (k = 0,1,\cdots,2N-1)$$

by performing discrete Fourier transform on each of the two pieces of sampled data

$$\{x_{2N}(n)\}, \quad (n = 0,1,\cdots,2N-1), \quad \{y_{2N}(n)\}, \quad (n = 0,1,\cdots,2N-1)$$

having N zero points added to each of the two pieces of sampled data acquired by the data acquisition section;
a cross-correlation function calculation section for determining a cross-correlation function

$$R_{2N}^{(x,y)}(n) = \frac{1}{2N}\sum_{k=0}^{2N-1} X_{2N}^*(k)Y_{2N}(k)\exp\left(j\frac{2\pi nk}{2N}\right)$$

$$= \sum_{m=0}^{2N-1} x_{2N}(m-n)y_{2N}(m)$$

by performing inverse discrete Fourier transform of a product of a complex conjugate of one spectrum

$$\{X_{2N}(k)\}, \quad (k = 0,1,\cdots,2N-1)$$

of the two spectra calculated by the spectrum calculation section and the other spectrum

$$\{Y_{2N}(k)\}, \quad (k = 0,1,\cdots,2N-1);$$

and
a peak position search section for determining the peak position according to an equation

$$R_{2N}^{(x,y)}(\tau) = \sum_{l=0}^{2N-1} \psi_{2N}(\tau - l\Delta t) R_{2N}^{(x,y)}(l\Delta t) \qquad \dots \text{ (A)}$$

expressing a cross-correlation function $R_{2N}^{(x,y)}(\tau)$ at an arbitrary point $\tau$ including intermediate points between sampling points $l\Delta t$, ($l$=0,1,$\cdots$,2$N$-1) at the sampling interval $\Delta t$, where $\psi_{2N}(\tau\text{-}l\Delta t)$ is an interpolation function and expressed by

$$\psi_{2N}(t) = \frac{1}{2N} \cdot \cos\left(\frac{\pi t}{2N \cdot \Delta t}\right) \cdot \frac{\sin\left(\dfrac{\pi t}{\Delta t}\right)}{\sin\left(\dfrac{\pi t}{2N \cdot \Delta t}\right)} \qquad \dots \text{ (B)}$$

**5.** The peak position search apparatus according to claim 4, **characterized in that** the peak position search section determines the peak position with the predetermined precision through:

a first subdivision step of determining a cross-correlation function at each subdivision point obtained by subdividing a first interval near a first peak position including an error determined by the cross-correlation function at the sampling interval $\Delta t$ determined by the cross-correlation function calculation section by an interval $\Delta\tau_1$ which is smaller than the sampling interval $\Delta t$;
a second subdivision step of determining a cross-correlation function at each subdivision point obtained by subdividing a second interval, which is narrower than the first interval, near a second peak position including an error determined by the cross-correlation function at intervals of $\Delta\tau_1$ determined in the first subdivision step by an interval $\Delta\tau_2$ which is smaller than the interval $\Delta\tau_1$; and
an n-th subdivision step of, in an analogous fashion until a peak position with desired precision is searched for, determining a cross-correlation function at each subdivision point obtained by subdividing an n-th interval, which is narrower than the (n-1)-th interval, near a (n-1)-th peak position including an error determined by the cross-correlation function at intervals of $\Delta\tau_{n-1}$ determined in the (n-1)-th subdivision step (n = 2, 3,...) by an interval $\Delta\tau_n$ which is smaller than the interval $\Delta\tau_{n-1}$.

**6.** The peak position search apparatus according to claim 4 or 5, **characterized in that** the sampling interval $\Delta t$ is a sampling time interval $\Delta t$ and the data acquisition section acquires two pieces of sampled time series data

$$\{x_N(n)\}, \quad (n = 0,1,\cdots,N-1), \quad \{y_N(n)\}, \quad (n = 0,1,\cdots,N-1)$$

sampled at the sampling time interval $\Delta t$, where a signal value $x_N(n\Delta t)$ at $t = n\Delta t$ is abbreviated as $x_N(n)$.

**7.** The peak position search apparatus according to claim 6, **characterized by** further including an analog/digital converter for generating digital sampled time series data by receiving an analog signal and sampling the analog signal at a sampling time interval $\Delta t$ in a forward portion of the data acquisition section.

**8.** The peak position search apparatus according to claim 7, **characterized by** further including an anti-aliasing filter for preventing aliasing noise in a further forward portion of the analog/digital converter.

9. A peak position search program storage medium storing a peak position search program executed in a computer to cause the computer to operate as a peak position search apparatus for determining a peak position of a cross correlation between two pieces of sampled data, the peak position search apparatus including:

a data acquisition section for acquiring two pieces of sampled data

$$\{x_N(n)\}, \quad (n = 0,1,\cdots,N-1), \quad \{y_N(n)\}, \quad (n = 0,1,\cdots,N-1)$$

sampled at a predetermined sampling interval $\Delta t$;
a spectrum calculation section for calculating two spectra

$$\{X_{2N}(k)\}, \quad (k = 0,1,\cdots,2N-1), \quad \{Y_{2N}(k)\}, \quad (k = 0,1,\cdots,2N-1)$$

by performing discrete Fourier transform on each of the two pieces of sampled data

$$\{x_{2N}(n)\}, \quad (n = 0,1,\cdots,2N-1), \quad \{y_{2N}(n)\}, \quad (n = 0,1,\cdots,2N-1)$$

having N zero points added to each of the two pieces of sampled data acquired by the data acquisition section;
a cross-correlation function calculation section for determining a cross-correlation function

$$R_{2N}^{(x,y)}(n) = \frac{1}{2N}\sum_{k=0}^{2N-1} X_{2N}^{*}(k)Y_{2N}(k)\exp\left(j\frac{2\pi nk}{2N}\right)$$
$$= \sum_{m=0}^{2N-1} x_{2N}(m-n)y_{2N}(m)$$

by performing inverse discrete Fourier transform of a product of a complex conjugate of one spectrum

$$\{X_{2N}(k)\}, \quad (k = 0,1,\cdots,2N-1)$$

of the two spectra calculated by the spectrum calculation section and the other spectrum

$$\{Y_{2N}(k)\}, \quad (k = 0,1,\cdots,2N-1);$$

and
a peak position search section for determining the peak position according to an equation

$$R_{2N}^{(x,y)}(\tau) = \sum_{l=0}^{2N-1} \psi_{2N}(\tau - l\Delta t)R_{2N}^{(x,y)}(l\Delta t) \qquad \cdots \text{(A)}$$

expressing a cross-correlation function $R_{2N}^{(x,y)}(\tau)$ at an arbitrary point $\tau$ including intermediate points between sampling points $(l\Delta t)$, $(l=0,1,\cdots,2N-1)$ at the sampling interval $\Delta t$, where $\psi_{2N}(\tau-l\Delta t)$ is an interpolation function and expressed by

$$\psi_{2N}(t) = \frac{1}{2N} \cdot \cos\left(\frac{\pi t}{2N \cdot \Delta t}\right) \cdot \frac{\sin\left(\frac{\pi t}{\Delta t}\right)}{\sin\left(\frac{\pi t}{2N \cdot \Delta t}\right)} \qquad \cdots \quad (B)$$

10. The peak position search program storage medium according to claim 9, **characterized in that** the peak position search section determines the peak position with the predetermined precision through:

a first subdivision step of determining a cross-correlation function at each subdivision point obtained by subdividing a first interval near a first peak position including an error determined by the cross-correlation function at the sampling interval $\Delta t$ determined by the cross-correlation function calculation section by an interval $\Delta\tau_1$ which is smaller than the sampling interval $\Delta t$;

a second subdivision step of determining a cross-correlation function at each subdivision point obtained by subdividing a second interval, which is narrower than the first interval, near a second peak position including an error determined by the cross-correlation function at intervals of $\Delta\tau_1$ determined in the first subdivision step by an interval $\Delta\tau_2$ which is smaller than the interval $\Delta\tau_1$; and

an n-th subdivision step of, in an analogous fashion until a peak position with desired precision is searched for, determining a cross-correlation function at each subdivision point obtained by subdividing an n-th interval, which is narrower than the (n-1)-th interval, near a (n-1)-th peak position including an error determined by the cross-correlation function at intervals of $\Delta\tau_{n-1}$ determined in the (n-1)-th subdivision step (n = 2, 3,...) by an interval $\Delta\tau_n$ which is smaller than the interval $\Delta\tau_{n-1}$.

11. The peak position search program storage medium according to claim 9 or 10, **characterized in that** the sampling interval $\Delta t$ is a sampling time interval $\Delta t$ and the data acquisition section acquires two pieces of sampled time series data

$$\{x_N(n)\}, \quad (n = 0,1,\cdots,N-1), \quad \{y_N(n)\}, \quad (n = 0,1,\cdots,N-1)$$

sampled at the sampling time interval $\Delta t$, where a signal value $x_N(n\Delta t)$ at $t=n\Delta t$ is abbreviated as $x_N(n)$.

Fig. 1

Fig. 2

Fig. 3

EP 1 990 735 A2

**Fig. 4**

CD-ROM — 105

PEAK POSITION SEARCH PROGRAM — 200

DATA ACQUISITION SECTION — 210

SPECTRUM CALCULATION SECTION — 220

CROSS-CORRELATION FUNCTION CALCULATION SECTION — 230

PEAK POSITION SEARCH SECTION — 240

**Fig. 5**

START

ACQUIRE DATA (a)

CALCULATE SPECTRA (b)

CALCULATE CROSS-CORRELATION FUNCTION (c)

SEARCH FOR PEAK POSITION (d)

END

START

SUBDIVIDE (d1)

(d2)

IS DESIRED PRECISION
REACHED?

No

Yes

END

Fig. 6

300

| 301 | 302 | 310 | 320 | 330 | 340 |
|-----|-----|-----|-----|-----|-----|
| ANTI-ALIASING FILTER | ANALOG/ DIGITAL CONVERTER | DATA ACQUISITION SECTION | SPECTRUM CALCULATION SECTION | CROSS-CORRELATION FUNCTION CALCULATION SECTION | PEAK POSITION SEARCH SECTION |

Fig. 7

Fig. 8(A)

Fig. 8(B)

Fig. 8(C)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002278948 A

**Non-patent literature cited in the description**

- **S. D. STEARNS ; R. A. DAVID.** Signal Processing Algorithms. Prentice-Hall, Inc, 1988, 212-223

- Measurement of Directivity of Automobile Traveling Noise Using Cross-Correlation Method. **KOICHIMAKINO ; TAKATOSHI YOKOTA ; KOHEI YAMAMOTO ; YOSHIAKI OKADA ; KOICHI YOSHIHISA.** Collection of Lectures of the Acoustical Society of Japan. March 2007, 827-828